# EUROPÄISCHE PATENTANMELDUNG

(11) **EP 2 506 378 A1**
(43) Veröffentlichungstag der Anmeldung: **03.10.2012**
(21) Anmeldenummer: 11160831.1
(22) Anmeldetag: 01.04.2011
(51) Int. Cl.: H02G 11/02, B60L 11/18

(54) **Elektrische Leitung für die Energieversorgung von Fahrzeugen**

(71) Anmelder: Lapp Engineering & Co., 6330 Cham (CH)
(72) Erfinder: Mateski, Saso, 70199 Stuttgart (DE); Heinrich, Ingeborg, 70569 Stuttgart (DE)

(57) **Zusammenfassung**

Elektrische Leitung (10) insbesondere für die Energieversorgung eines Fahrzeugs (50), mit einer Ummantelung (16), innerhalb der wenigstens zwei isolierte elektrische Leiter (12) vorgesehen sind, die mit wenigstens einem Steckverbinder (18) an mindestens einem ersten Ende der Leitung (10) verbunden sind. Erfindungsgemäss sind die Ummantelung (16) und/oder die Leiter (12) und/oder wenigstens ein in der Leitung (10) vorzugsweise vorgesehenes Formgebungselement (20) derart ausgestaltet, dass die Leitung (10) mit einer Rückstellkraft in einer Ruhestellung gehalten ist, in der die Leitung (10) die Form einer Spirale aufweist und entlang einer ebenen oder gekrümmten Ruhefläche ausgerichtet ist.

## Beschreibung

Die Erfindung betrifft eine elektrische Leitung für die Energieversorgung von Fahrzeugen, eine Vorrichtung zur Speicherung einer solchen Leitung sowie ein Fahrzeug mit einer solchen Leitung.

Um Fahrzeuge mit elektrischen Antrieben mit elektrischer Energie zu versorgen, muss eine elektrisch leitende Verbindung zwischen einer Energiequelle und dem Fahrzeug vorgesehen werden. Dazu können beliebige elektrische Leitungen verwendet werden, die zum Beispiel von einer Kabelrolle in passender Länge abgewickelt werden. Das Abwickeln und Aufwickeln der Leitung ist dabei jeweils mit Aufwand verbunden. Sofern die Leitung hingegen nicht aufgewickelt und am Boden liegen gelassen wird, können Schäden an der Leitung auftreten. Da bei kann die Leitung als Stolperdraht wirken und bei Schäden an der Ummantelung sogar als elektrische Gefahrenquelle auftreten.

Weiterhin besteht die Gefahr der Verwitterung von Leitungen, die frei aufgehängt werden. Zudem besteht die Gefahr der Beschädigung und der Entwendung der Leitung.

Fallweise müssen dabei verschiedene Distanzen überwunden werden, weshalb die Verbindung jeweils über eine gewisse Distanz flexibel ausgestaltet sein soll. Zum anderen soll die Leitung nach deren Gebrauch möglichst einfach in eine kompakte Ruhestellung verbracht werden können.

Vermehrt werden heute Fahrzeuge mit elektrischen Antrieben angeboten, bei welchen die Batterien des Fahrzeuges über elektrische Leitungen aufgeladen werden. Entsprechende Leitungen zum Laden der Batterien sind meist stationär an öffentlichen oder privaten Ladestationen vorhanden. Um das Fahrzeug auch im Falle, dass keine stationäre Ladestation mit entsprechender Leitung vorhanden ist an einer Ladestation oder einer Steckdose aufladen zu können, werden entsprechende Leitungen im Fahrzeug mitgeführt.

Leitungen für Fahrzeuge sollen während des Ladevorganges der Batterien Distanzen von bis zu einigen Metern überwinden. Nach abgeschlossenem Ladevorgang, soll das Kabel einfach und insbesondere wenn es im Fahrzeug mit begrenzten Platzverhältnissen mitgeführt wird, in eine sehr kompakte Ruhestellung gebracht werden können.

Aus der Offenlegungsschrift DE 42 12 207 A1 ist eine Leitungsvorrichtung für Fahrzeuge bekannt, mit einem Gehäuse und einer wendelförmigen Leitung, die in dem Gehäuse unterbringbar ist. Die Leitung ist aus dem Gehäuse herausführbar und an eine externe Stromquelle anschliessbar, um dem Fahrzeug elektrischen Strom zuzuführen. Die Leitung ist dabei eine elastisch dehnbare Leitung deren Rückstellkraft zumindest bei geringer Dehnung gleich oder grössser ist als das Gewicht der Leitung. Nachteilig an der beschriebenen Leitungsvorrichtung ist ihr relativ grosses Volumen in der Ruhestellung und dass damit verbundene grosse Gehäuse, in welchem die Leitungsvorrichtung am Fahrzeug untergebracht ist.

Ein weiterer Nachteil an derartigen wendelförmig gewundenen elektrischen Leitungen ist ihre teilweise hohe Rückstellkraft. Wodurch einerseits vom Anwender ein erhöhter Kraftaufwand beim verbringen der Leitung von der Ruhestellung in eine Arbeitsstellung aufgebracht werden muss. Zum anderen lastet die Rückstellkraft der Leitung in der Arbeitsstellung auch auf dem Steckverbinder. Aufgrund der hohen Rückstellkraft, muss entweder der Steckverbinder, in einem mit einem Gegenstück verbunden Zustand, speziell gegen unbeabsichtigtes Trennen gesichert werden oder je nach Winkel können grosse Scherkräfte auf dem Steckverbinder lasten, wodurch entsprechende konstruktive Gegenmassnahmen erforderlich sind.

Erst durch die Rückstellkraft lässt sich eine schraubenförmig gewundene elektrische Leitung in ihre kompakte Ruhestellung bringen. Um die Rückstellkraft bei einer schraubenförmig gewundenen Leitung zu erzeugen, muss diese in einem Ofen getempert werden. Danach wird die Leitung einseitig eingespannt und in einem Rückdrehprozess, welcher entgegen der Spiralrichtung verläuft, umgedreht. Erst durch diesen manuell aufwendigen und somit kostenintensiven Prozess, erhält die Leitung die notwendige Rückstellkraft um sich selbständig in eine kompakte Ruhestellung zurückzuziehen.

Die Grösse der Rückstellkraft ist von verschiedenen Parametern der Leitung abhängig, so beispielsweise vom Aussendurchmesser der schraubenförmig gewundenen elektrischen Leitung. Kleinere Schraubendurchmesser erzeugen eine grössere Rückstellkraft als Schraubendurchmesser mit einem grösseren Aussendurchmesser. Im Fahrzeugbau ist der vorhandene Raum zur Unterbringung von Leitungen sehr beschränkt. Schraubförmig gewundene Leitungen mit einem kleinen Schraubendurchmesser benötigen zur Speicherung lange Vorrichtungen, welche tief in den Fahrzeugraum ragen. Bei der Verwendung von grossen Schraubendurchmessern ragt die Speichervorrichtung weniger tief in den Fahrzeugraum es wird jedoch eine grosse Fläche für die Unterbringung beansprucht.

Weiter haben Leitungen mit einem grossen Leitungsdurchmesser eine höhere Rückstellkraft, als Leitungen mit einem kleinen Leitungsdurchmesser. Die bei Elektrofahrzeugen verwendeten elektrischen Leitungen sind häufig für schnelle Ladungen der Akkus in den Fahrzeugen ausgelegt und müssen entsprechend hohe elektrische Ströme leiten. Durch die hohen zu leitenden Ströme ist ein entsprechend grosser Leitungsquerschnitt zu wählen, wodurch ein grosser Leitungsdurchmesser und folglich hohe Rückstellkräfte resultieren.

Die Rückstellkraft wird ebenfalls durch die verwendeten Kunststoffe des Kabelmantels, die Verseilung der einzelnen Litzen und Adern sowie die Umgebungstemperatur und die Alterung der Leitung beeinflusst.

Die Rückstellkraft einer schraubenförmig gewundenen elektrischen Leitung nimmt annähernd proportional mit der Dehnung der Leitung zu. Dies bedeutet, dass bei starker Dehnung der Leitung die Rückstellkraft sehr gross werden kann. Ausserdem besteht die Gefahr, dass bei einer starken Dehnung, vor allem wenn diese über einen gewissen Zeitraum anhält, die Leitung nicht mehr in ihre ursprüngliche Ruhestellung durch die Rückstellkraft zurückgezogen wird. Bei einer schraubenförmig gewundenen Leitung kann deshalb maximal ca. 50% der gesamten Leitungslänge in der Arbeitsstellung genutzt werden. Dies bedeutet andererseits, dass bei der Produktion 50% mehr Material für die Leitung aufgewendet werden muss, als im Betrieb genutzt werden kann. Dadurch entstehen hohe Produktionskosten. Zusätzlich bedeutet dies auch, dass mehr Material und damit mehr Volumen und Gewicht, welches Insbesondere im Betrieb eines Fahrzeuges zusätzliche Energie bedarf erfordert, transportiert werden muss.

Der vorliegenden Erfindung liegt daher die Aufgabe zu Grunde, eine verbesserte elektrische Leitung insbesondere für Elektrofahrzeuge bereitzustellen. Ferner sind eine Speichervorrichtung für diese Leitung sowie ein mit dieser Leitung ausgerüstetes Fahrzeug anzugeben.

Insbesondere ist eine elektrische Leitung anzugeben, mittels der vorteilhaft eine Verbindung zwischen einer Stromversorgungsquelle und einem Verbraucher oder einer Speichervorrichtung herstellbar ist.

Die elektrische Leitung, mittels der unterschiedliche Distanzen überbrückbar sein sollen, soll dabei vorteilhaft handhabbar und mit minimalem Aufwand aus einer Speichervorrichtung entnehmbar und darin wieder versorgbar sein.

Dabei soll die elektrische Leitung durch eine Rückstellkraft so weit in eine Ruhestellung rückführbar sein, dass die elektrische Leitung in der Ruhestellung ein minimales Raumvolumen einnimmt und die der Lagerung der elektrischen Leitung dienende Speichervorrichtung einen entsprechend geringen Speicherraum aufweisen kann.

Erfindungsgemässe Speichervorrichtungen sollen daher nur einen geringen Raumbedarf aufweisen und vorteilhaft in die Karosserie eines Fahrzeugs integrierbar sein.

Ferner soll die elektrische Leitung mit minimalem Aufwand gegen Witterungseinflüsse und gegen Vandalismus schützbar sein.

Weiter soll durch Einsparung von Leitungsmaterial Ressourcen und Kosten bei der Produktion und der Anwendung in Fahrzeugen eingespart werden.

Ausserdem soll durch den Verzicht einzelner Produktionsschritte, wie bspw. den Rückdrehprozess, die Produktionskosten zusätzlich gesenkt werden.

Die Aufgabe wird mit einer elektrischen Leitung gelöst, welche die in Anspruch 1 angegebenen Merkmale aufweist. Vorteilhafte Ausgestaltungen der Erfindung sind in weiteren Ansprüchen angegeben.

Die elektrische Leitung, die vorteilhaft für die Energieversorgung von Fahrzeugen einsetzbar ist, umfasst eine Ummantelung, innerhalb der wenigstens zwei isolierte elektrische Leiter vorgesehen sind, die mit wenigstens einem Steckverbinder verbunden sind.

Erfindungsgemäss sind die Ummantelung und/oder die Leiter und/oder wenigstens ein in der Leitung vorgesehenes Formgebungselement derart ausgestaltet, dass die Leitung mit einer Rückstellkraft selbsttätig in einer Ruhestellung gehalten ist. In dieser Ruhestellung weist sie die Form einer Spirale auf, die entlang einer ebenen oder zumindest teilweise gekrümmten Ruhefläche ausgerichtet ist.

Durch die inhärent wirkende Rückstellkraft wird die elektrische Leitung nach Gebrauch und Freigabe in ihre Ruhestellung zurückgezogen, bzw. in der Ruhestellung gehalten. Die Rückstellkraft erleichtert somit das Überführen der Leitung aus einer Arbeitsstellung, in welcher die Leitung mittels eines Steckverbinders zum Beispiel mit einer Stromquelle verbunden ist, in die Ruhestellung.

Aufgrund der Ausrichtung der elektrischen Leitungen in der Ruhestellung entlang einer Fläche oder Ebene resultiert ein minimaler Raumbedarf bzw. ein geringes Speichervolumen. Im Gegensatz zu einer wendelförmig gewickelten Leitung, die in der Ruhestellung die Form eines Hohlzylinders aufweist, dessen Zylindervolumen ungenutzt bleibt, resultiert bei der erfindungsgemässen Leitung eine maximale Ausnutzung des Speichervolumens beziehungsweise eine hohe Packungsdichte der Leitung. Eine der Aufnahme der elektrischen Leitung dienende Speichervorrichtung kann daher vorteilhaft in die Karosserie eines Fahrzeugs integriert werden, welche an verschiedenen Stellen geeignete Speichervolumina aufweist, die eine grosse Grundfläche und eine geringe, aber ausreichende Höhe aufweisen.

Durch die unterschiedlichen Durchmesser der spiralförmig verlaufenden Windungen resultiert eine nichtlineare Rückstellkraft, welche ein gleichmässiges und leichtes Überführen der Leitung von einer Ruhestellung in eine Arbeitsstellung und zurück ermöglichen.

Bei der spiralförmig gewickelten Leitung kann aufgrund der optimierten Rückstellkraft praktisch die volle Leitungslänge in der Arbeitsstellung genutzt werden. Somit entfallen Materialkosten gegenüber einer wendelförmig gewickelten Leitung, bei welcher typischerweise nur etwa 50% der gesamten Leitungslänge in einer Arbeitsstellung genutzt werden können. Zusätzlich wird Gewicht eingespart, wodurch wiederum die Handhabung erleichtert wird.

Die erfindungsgemässe Leitung weist daher insbesondere für weniger kräftige Anwender besondere Vorteile auf. Nach dem Öffnen der Speichervorrichtung kann das mit einem Steckverbinder versehene freie Ende der elektrischen Leitung mit einer Hand erfasst und mit der »Tanksäule« verbunden werden. Nach dem Abschluss des Energietransfers kann der Steckverbinder mit einer Hand wieder gelöst und in die Speichervorrichtung zurückgeführt werden, wobei die elektrische Leitung selbsttätig in die Ausgangsform bzw. in die Ruhestellung zurückgeführt wird.

Daraus resultiert der weitere grosse Vorteil, dass der Anwender bzw. die Anwenderin kaum in Kontakt mit Vorrichtungsteilen gerät, die gegebenenfalls verschmutzt sein können.

In einer bevorzugten Ausgestaltung weist die Gehäusewand wenigstens eine räumliche Erhöhung auf, welche in die anliegende Spiralform der Leitung eingreift. Beispielsweise ist die Fläche bzw. Seitenwand der Speichervorrichtung, an der die Leitung in der Ruhestellung anliegt, zumindest teilweise konisch ausgestaltet, so dass die Leitung in der Ruhestellung gestützt wird. Während der Lagerung der Leitung wirken daher nur geringe Kräfte auf diese ein, weshalb auch nach längerer Zeit keine Verformung eintritt. Ferner kann eine spiralförmig verlaufende Vertiefung, die der Aufnahme der Leitung dient, in die Gehäusewand eingeprägt sein.

Vorzugsweise wird die erfindungsgemässe Leitung an dem aussen liegenden Ende der Spirale stationär gehalten und mit einer Stromquelle, einem Verbraucher oder einer Speichereinheit verbunden. Durch die Fixierung der Leitung an einem definierten Punkt erfolgt eine kontrollierte Überführung der Leitung in die Ruhestellung.

In einer weiteren vorzugsweisen Ausgestaltung ist die elektrische Leitung mit wenigstens einem Formgebungselement versehen, welches nicht der Leitung von elektrischem Strom, sondern der Formgebung der Leitung dient. Das Formgebungselement, z.B. eine Spiralfeder aus Metall (z.b. Nitinol) oder Kunststoff, verleiht der Leitung eine gewünschte Rückstellkraft. Die elektrische Leitung kann daher hinsichtlich der Energieübertragung und Isolation optimiert werden, während das Formgebungselement hinsichtlich einer dauerhaften Formgebung und der gewünschten Rückstellkraft optimiert wird. Die einzelnen Materialien der Leitung können hingegen auch beliebig miteinander kombiniert werden, um die gewünschten Eigenschaften der erfindungsgemässen Leitung zu erreichen.

In vorzugsweisen Ausgestaltungen wird vorgesehen, dass das Formgebungselement aus der Leitung entfernt und ersetzt werden kann. Auf diese Weise kann eine Leitung mit geringem Wartungsaufwand in ihrem Originalzustand zurückgeführt werden. Das Formgebungselement wird in diesem Fall zumindest annähernd parallel zur Leitung geführt und liegt an der Ummantelung an. Beispielsweise wird das Formgebungselement mittels Klammern mit der Leitung verbunden. Alternativ kann das Formgebungselement in die Leitung integriert werden.

Vorzugsweise wird die Ummantelung oder das Formgebungselement aus Formgedächtnis-Polymeren gefertigt, die einen Shape Memory-Effekt aufweisen, also sich an ihre frühere äussere Form trotz einer zwischenzeitlichen starken Umformung "erinnern". Die ersten Formgedächtnis-Polymere bestanden aus zwei Komponenten. Die erste Komponente war ein elastisches Polymer, eine Art "Federelement", die zweite Komponente war ein aushärtender Wachs, der das "Federelement" in jeder gewünschten Form arretieren konnte. Erwärmte man das Formgedächtnis-Polymer, so wurde der Wachs weich und konnte der Kraft des Polymers bzw. des Federelements nicht mehr entgegenwirken. Das Formgedächtnis-Polymer nahm in der Folge wieder seine ursprüngliche Form an. In der vorliegenden Anwendung wird lediglich ein elastisches Element, vorzugsweise ein elastisches Polymer verwendet, das als Federelement wirkt.

Beispielsweise besteht die Leitung mindestens teilweise aus einem thermoplastischen Kautschuk oder einem thermoplastischen Elastomer, vorzugsweise aus PUR und/oder PVC-Nitrilkautschuk. Der elektrische Leiter besteht vorzugsweise aus Kupfer oder Aluminium oder aus einer Legierung, die Kupfer und/oder Aluminium enthält, oder aus leitendem Kunststoff. Thermoplastischer Kautschuk oder thermoplastisches Elastomer dient als Isolationsmaterial für den Aussenmantel der Leitung und kann durch Tempern in eine Form gebracht werden, in die die Leitung danach immer wieder zurückgeführt wird. PUR besitzt dabei zusätzlich gute mechanische Eigenschaften und ist besonders abriebfest. Bei der Verwendung von Kupfer oder Aluminium oder entsprechenden Legierungen ist sowohl bei der Verseilung der Litzen, als auch bei der Verseilung der Leiter, darauf zu achten, dass die Leitung flexibel im Raum verlegt werden kann. Bei spiralförmig gewundenen Leitungen treten im normalen Gebrauch zusätzlich Torsionskräfte in der Leitung auf. Die Verwendung weicher Metalllegierungen oder leitender Kunststoffe erhöht somit die Flexibilität und verhindert Kabelbrüche in der Leitung.

In einer weiteren vorzugsweisen Ausgestaltung ist die Leitung vorzugsweise über die gesamte Länge, durchgehend oder segmentweise, mit magnetischen oder ferromagnetischen Elementen, vorzugsweise hartmagnetischen Elementen versehen. Besonders vorteilhaft ist die Verwendung einer Ummantelung, die einen flexiblen Magneten bildet. Die elektrische Leitung ist daher magnetisch, weshalb zusätzlich zur mechanischen Rückstellkraft eine magnetische Rückstellkraft resultiert und die Leitung in der Ruhestellung magnetisch fixiert wird.

Sofern einzelne magnetische Elemente vorgesehen sind, werden diese vorzugsweise auf der Seite der Leitung angeordnet, die der metallenen oder magnetischen Gehäusewand der Speichervorrichtung zugewandt ist. Zusätzlich kann der Steckverbinder mit wenigstens einem magnetischen oder ferromagnetischen Element versehen sein. Durch die Wirkung der magnetischen Elemente oder des magnetischen Materials, welches zum Beispiel in die Ummantelung integriert ist, wird die Leitung daher selbsttätig gegen die metallene oder magnetische Gehäusewand gezogen. Somit wird dem unbeabsichtigten Abwickeln der Leitung entgegengewirkt und die Leitung und gegebenenfalls auch der Steckverbinder in einem geordneten und stabilen Zustand gehalten. Sofern Vibrationen während des Betriebs des Fahrzeugs auftreten, wird eine Geräuschentwicklung durch die elektrische Leitung vermieden.

Vorzugsweise wird die erfindungsgemässe elektrische Leitung im Speicherraum einer Vorrichtung gelagert, dessen Abmessungen an die Form der spiralförmigen Leitung in der Ruhestellung angepasst sind. Dabei liegt die Leitung vorzugsweise an der grössten Gehäusewand des Speicherraums an.

Gegenüberliegend dieser Gehäusewand ist eine drehbare oder verschiebbare Abdeckung vorgesehen, welche es erlaubt, den Speicherraum zu öffnen. Durch den an die Abmessungen der spiralförmig gewundenen Leitung angepassten Speicherraum kann die Leitung auf kleinstmöglichem Raum untergebracht werden. Bevorzugt wird dabei ein Speicherraum verwendet, welcher eine geringe Tiefe und um ein Mehrfaches grössere Grundseiten aufweist. Die spiralförmig gewundene Leitung lässt sich dabei am einfachsten aus der Speichervorrichtung entnehmen, wenn die Abdeckung den gesamten Querschnitt des Speicherraums abdeckt und bei Benutzung der Leitung freigibt. Um das Entwenden der Leitung zu verhindern ist die Abdeckung vorzugsweise mit einem Verschluss versehen.

In einer weiteren vorzugsweisen Ausgestaltung weist die Speichervorrichtung einen Seilzug auf, dessen Seil im Bereich des Zentrums der Spirale aus der Gehäusewand der Speichervorrichtung austritt und vorzugsweise am Steckverbinder oder an der Leitung in unmittelbarer Nähe des Streckverbinders befestigt ist. Der Seilzug weist einen elektrischen Antrieb oder ein elastisches Element auf, welches die mit dem Seil verbundene Leitung jeweils in die Ruhestellung zurückführt und dadurch die Rückstellkraft der Leitung unterstützt. Zusätzlich kann mit dem Seilzug eine gegebenenfalls steuerbare Rückstellkraft erzeugt werden.

Zumindest der Steckverbinder am freien Ende der Leitung ist vorzugsweise in einer Vertiefung der Gehäusewand der Speichervorrichtung gelagert. Dadurch wird der Steckverbinder geschützt gehalten. Zudem wird ein flaches Design der Abdeckung der Speichervorrichtung erzielt.

Die erfindungsgemässe Leitung kann besonders vorteilhaft in Fahrzeugen angeordnet werden, ohne dass wesentliche Änderungen bei der Karosserie vorzusehen sind. Die Speichervorrichtung kann vorteilhaft in verschiedene Karosserieteile integriert werden, die einen Speicherraum für die spiralförmig aufgewickelte Leitung zur Verfügung stellen. Das ausgewählte Karosserieteil weist dabei einen vorzugsweise mindestens 0,09m² grosse, mindestens annähernd ebene Oberfläche und einen dahinter liegenden Hohlraum auf. Beispielsweise kann die Speichervorrichtung in die Kofferraumabdeckung, in die Motorhabe, in eine Tür, in das Fahrzeugdach oder in einen Kotflügel integriert werden.

In den entsprechend ausgerüsteten Fahrzeugen steht daher stets eine Leitung für den Strom Transfer zur Verfügung, die problemlos entnommen und über die erforderliche Distanz von vorzugsweise 2-3 m zu einer Ladestation bzw. Tanksäule gezogen werden kann.

Nachfolgend wird die Erfindung anhand von Zeichnungen näher erläutert. Dabei zeigt:
- Fig. 1: eine erfindungsgemässe elektrische Leitung 10 mit einer Ummantelung 16 und zwei isolierten elektrischen Leitern 12 in einer Ruhestellung, in welcher die Leitung 10, die an dem im Zentrum der Spirale liegenden freien Endstück mit einem Steckverbinder 18 versehen ist, die Form einer Spirale aufweist;
- Fig.2: die erfindungsgemässe Leitung 10 von Figur 1, deren freies Ende mit dem Steckverbinder 18 an der Aussenseite der Spirale liegt;
- Fig.3: einen Schnitt durch eine erfindungsgemässe Leitung 10, in die ein Formgebungselement 20 integriert ist;
- Fig.4: einen Schnitt durch eine erfindungsgemässe Leitung 10, in die ein magnetisches oder ferromagnetisches Element 34 integriert ist;
- Fig.5: in einer Schnittdarstellung eine der Lagerung einer Leitung 10 dienende erfindungsgemässe Speichervorrichtung 24, die mit einer drehbaren Abdeckung 30 abschliessbar ist;
- Fig.6: in einer Schnittdarstellung eine weitere erfindungsgemässe Speichervorrichtung 24, die mit einer verschiebbaren Abdeckung 30 abschliessbar ist;
- Fig.7: ein Fahrzeug 50 mit einer erfindungsgemässen Speichervorrichtung 24 die in die Tür 59 integriert ist und an verschiedenen Positionen im Fahrzeug 50 integrierbar ist; und

- Fig.8: eine zum Beispiel in die Karosserie eines Fahrzeugs integrierte Speichervorrichtung 24, die in einer vorzugsweisen Ausgestaltung mit einem Seilzug 40 kombiniert wird.

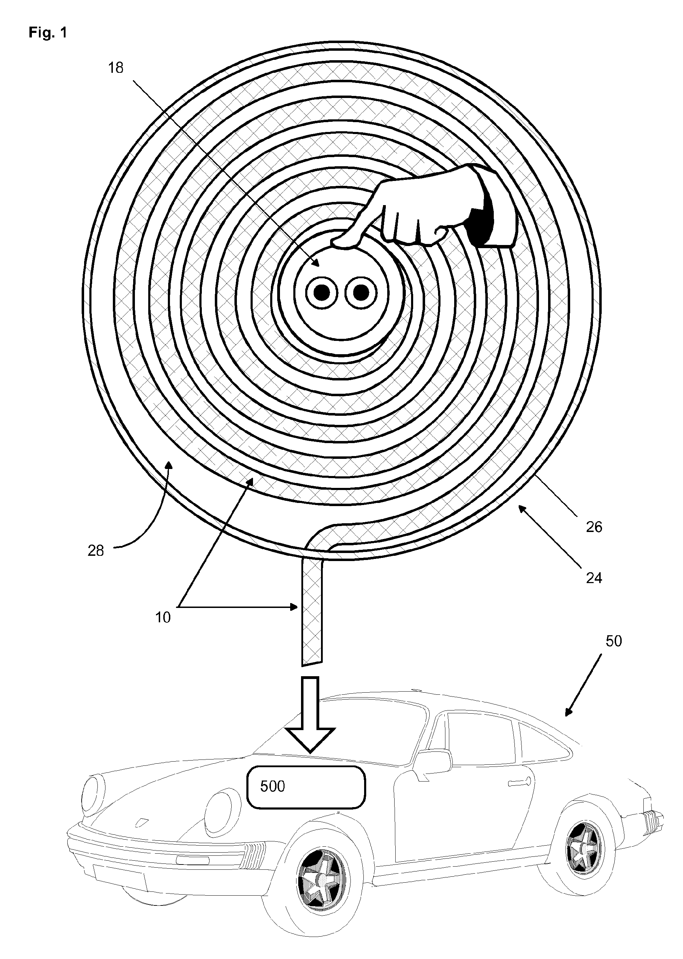

Figur 1 zeigt eine erfindungsgemässe Leitung 10, die vorteilhaft für die Energieversorgung von Fahrzeugen 50 einsetzbar ist. Die Leitung 10 umfasst eine Ummantelung 16 mit wenigstens zwei isolierten elektrischen Leitern 12. Die Leitung 10 kann zusätzlich der Übertragung anderer Medien oder Energieformen dienen. Beispielsweise kann ein Lichtwellenleiter in die Leitung 10 integriert sein.

Wenigstens am freien Ende ist die Leitung 10 mit einem Steckverbinder 18 versehen, durch den die Leitung 10 mit den Anschlüssen einer elektrischen Vorrichtung, wie einer Stromversorgungseinheit, verbindbar ist.

Abhängig von den Anforderungen an die Leitung 10 ist es auch möglich an beide Enden der Leitung 10 je einen Steckverbinder 18 zu befestigen. Dadurch wird eine Leitung 10 geschaffen, die unabhängig von einem Fahrzeug, in welchem sie mitgeführt wird, eingesetzt und beliebig verlängert werden kann.

Die Leitung 10 kann einseitig auch fest mit einer elektrischen Vorrichtung, zum Beispiel mit einer in einem Fahrzeug 50 vorgesehenen elektrischen Speichereinheit 500, verbunden sein.

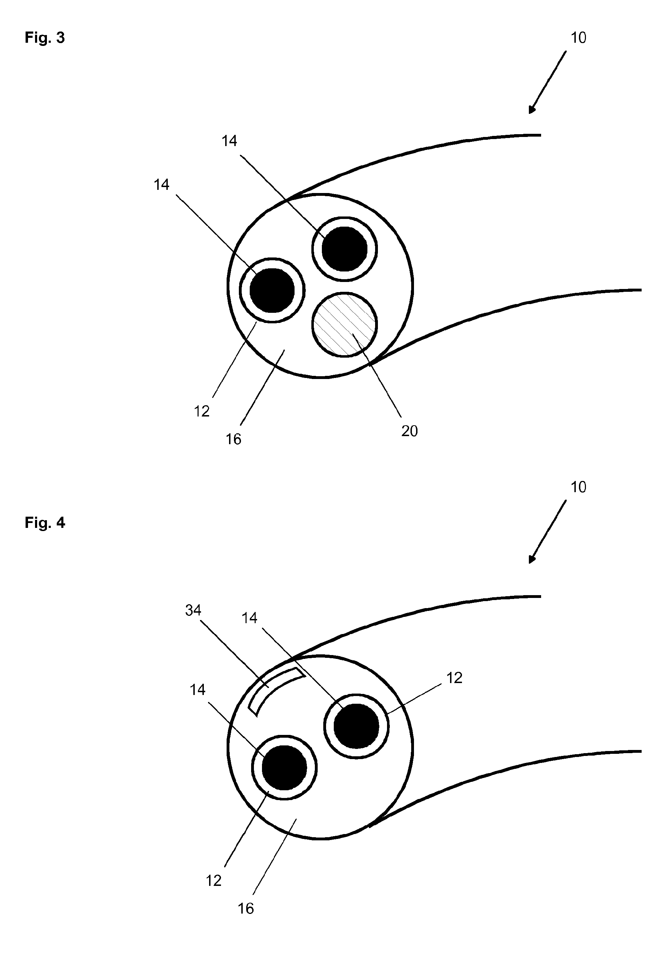

Erfindungsgemässen Leitungen werden in der Form einer Spirale gefertigt, so dass sie in der Ruhestellung an einer geraden oder gekrümmten Fläche anliegt und nach Benutzung in der Art einer Spiralfeder wieder in diese Form zurückkehrt. Die Rückstellkraft, die nach Gebrauch für die Rückführung der Leitung 10 in die Ausgangsform bzw. die Spiralform erforderlich ist, kann vorteilhaft durch die ursprünglichen Elemente der Leitung 10, wie die elektrischen Leiter 12 und die Ummantelung 16 (siehe Figur 3); durch zusätzliche in die Leitung 10 integrierte oder damit verbundene Formgebungs- oder Magnetelemente 20, 34 (siehe die Figuren 3 und 4); oder durch externe Zugvorrichtungen 40 zur Verfügung gestellt werden. Besonders vorteilhaft kann die erforderliche Rückstellkraft durch eine Kombination geeigneter Vorrichtungsteile erreicht werden.

Vorzugsweise wird die Ummantelung 16 oder das Formgebungselement aus Formgedächtnis-Polymeren gefertigt. Die Leitung 10 wird beispielsweise durch Tempern in die gewünschte Spiralform gebracht. Dazu wird die Leitung 10 während des Herstellungsprozesses auf ein entsprechendes Formelement oder Lehrstück (Dorn) gelegt. Die Leitung 10 wird dann während ca. 30 bis 50 Minuten bei 120° bis 150°C in einem Ofen erwärmt. Durch diesen Vorgang wird der Leitung 10 eine Rückstellkraft (FR) eingeprägt, mittels der sie sich jeweils in die Form zurückzieht bzw. in der Form hält, welche während des Tempervorganges vorgegeben wurde.

Als Stoffe für die Ummantelung 10 oder die Leiter können beispielsweise thermoplastische Kunststoffe wie PVC oder PUR verwendet werden. PUR wird dabei bevorzugt als äusserste Schicht der Leitung verwendet, da es gegenüber PVC besonders abriebfest ist. Weiter können auch Elastomere, wie Nitrilkautschuk (NBR), verwendet werden. Die aufgeführten Stoffe dienen sowohl der elektrischen Isolation als auch der Formgebung für die spiralförmig gewundene Leitung 10.

Die Form der Leitung 10 kann in einer Ebene spiralförmig verlaufend oder entlang einer Kegelform verlaufend sein. Beispielsweise kann durch die Formgebung während des Temperns eine Rückstellkraft FR in der Leitung 10 erzeugt werden, die auch in der Ruhestellung grösser ist als null. Dadurch verbleibt auch in der Ruhestellung eine Rückstellkraft FR, welche die Leitung 10 in Position hält.

In Figur 1 ist ferner eine Speichervorrichtung 24 gezeigt, die der Aufnahme der Leitung 10 dient und eine Gehäusewand 28 aufweist, an der die spiralförmig gewundene Leitung 10 in der Ruhestellung anliegt. Die Gehäusewand 28 kann eine ebene oder eine konisch nach innen oder nach aussen gewölbt Auflagefläche aufweisen.

Anschliessend an die Gehäusewand 28 ist eine Umrandung 26 vorgesehen, die der Führung und Begrenzung beim Einlegen der äussersten Windung der Leitung 10 dient.

Wie dies in Figur 1 gezeigt ist kann der am freien Ende der Leitung 10 im Zentrum der Spirale sitzende Steckverbinder 18 mit einer Hand erfasst und zu einem Anschluss einer «elektrischen Tanksäule≪ gezogen und dort mit einem kompatiblen Steckverbinder verbunden werden.

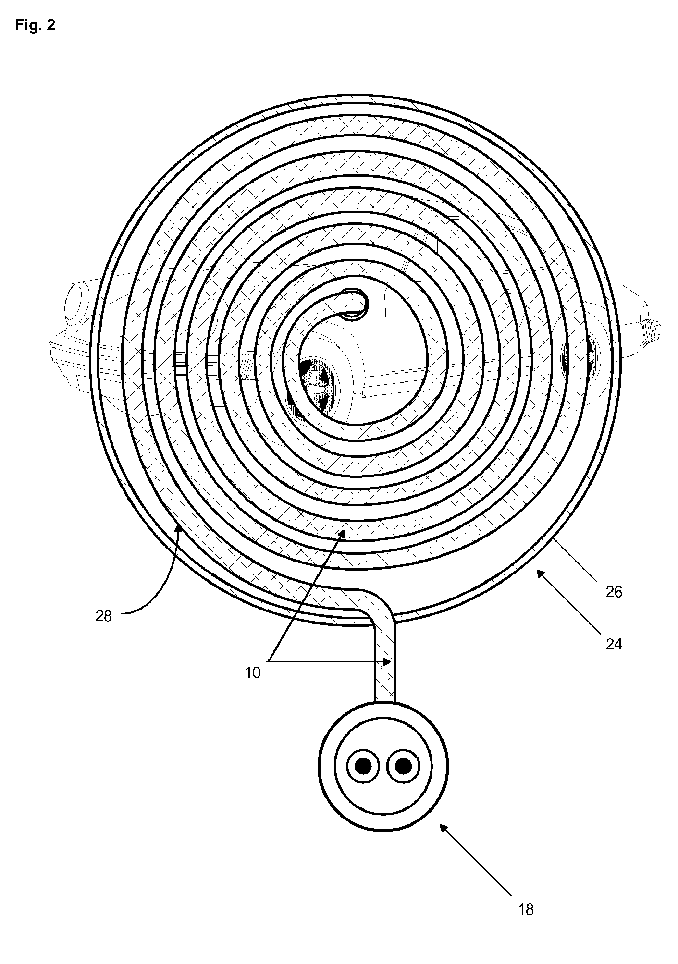

Figur 2 zeigt eine im Vergleich zu Figur 1 in entgegengesetzter Richtung aufgewickelte erfindungsgemässe Leitung 10. Eine erfindungsgemässe Leitung 10 kann sowohl links- als auch rechtsherum gewunden sein. Abhängig von der Verseilung der Leiter 12 und der Litzen des leitenden Materials ergibt sich eine bevorzugte Drehrichtung für die Spirale.

Die Leitung ist in der Regel an einem Ende fest mit einer Energiequelle, einer elektrischen Speichereinheit oder einem Verbraucher verbunden. Die feste Verbindung kann sowohl in der Mitte der Spirale als auch an der äussersten Windung angebracht sein. Am gegenüberliegenden Ende der spiralförmigen Leitung 10 befindet sich jeweils der Steckverbinder 18. Wie bereits erwähnt kann auch an beiden Enden der Leitung 10 ein Steckverbinder 18 angeordnet sein.

Figur 3 zeigt eine Schnittdarstellung der erfindungsgemässen Leitung 10, die zwei elektrische Leiter 12 umfasst, die je ein elektrisch leitendes Material 14 aufweisen. Als leitendes Material 14 werden beispielsweise Metalle wie Kupfer oder Aluminium verwendet. Neben einer guten elektrischen Leitfähigkeit wird vom leitenden Material 14 auch eine hohe Flexibilität gefordert. Um den hohen Anforderungen an die Flexibilität zu entsprechen, werden auch Legierungen wie beispielsweise CuSn₆ oder leitende Kunststoffe verwendet. Das leitende Material 14 besteht üblicherweise aus einzelnen feinen Metalldrähten, welche zu Litzen verseilt werden. Es kann jedoch auch ein einzelner Metalldraht verwendet werden.

Zusätzlich zu den elektrischen Leitern 12 ist in der gezeigten Leitung 10 ein Formgebungselement 20 integriert, das die Rückstellkraft FR der Leitung 10 erzeugt oder verstärkt. Das Formgebungselement 20 besteht beispielsweise aus einem Formgedächtnis-Polymer oder einem mit Glasfasern verstärkten Kunststoff oder aus einer Metalllegierung mit Formgedächtnis z.B. Nitinol oder einer Umlegung aus Nitinol-Draht.

Das Formgebungselement 20 kann fest in die Leitung 10 eingearbeitet sein. Aufgrund der Alterung kann beim Formgebungselement 20 unter Umständen eine Ermüdung oder ein Materialbruch auftreten. In vorzugsweisen Ausgestaltungen wird das Formgebungselement 20 daher so in die Leitung 10 integriert oder damit verbunden, dass es mit geringem Aufwand ausgetauscht werden kann.

Die Handhabung der Leitung 10 kann besonders vorteilhaft durch magnetische oder ferromagnetische Elemente unterstützt werden, die an der Leitung 10 vorgesehen oder in diese integriert werden. Die magnetischen Elemente können als grössere Einzelstücke vorgesehen werden oder partikelweise in die Elemente der Leitung, vorzugsweise in die Ummantelung 16, integriert werden. Zu diesem Zweck werden Magnetwerkstoffe pulverisiert, mit geeigneten Kunststoffen vermischt und durch Kalendrieren, Extrudieren, Pressen oder Spritzgiessen zu fertigen Magneten verarbeitet.

Figur 4 zeigt eine Schnittdarstellung einer weiteren erfindungsgemässen Leitung 10. In der Leitung 10 sind ebenfalls zwei Leiter 12 vorhanden. Zusätzlich befindet sich an einer Seite der Leitung 10 ein magnetisches- oder ein ferromagnetisches Element 34, welches das Zurückziehen und selbsttätige Aufwickeln sowie das Halten der Leitung in der Ruhestellung unterstützt. Auch der Steckverbinder 18 wird vorzugsweise mit magnetischen- oder ferromagnetischen Elementen 34 versehen, so dass er einfach positioniert werden kann und in der Ruhestellung gehalten ist.

Magnetische Elemente 34 könne beispielsweise Hartmagnete wie Neodymium-Magnete (Nd₂Fe₁₄B) sein. Durch die magnetische Kraft wird zusätzlich ein Verschieben oder Vibrieren der Leitung 10 in der Speichervorrichtung 24 verhindert. Auch bei starken Beschleunigungen und bei der Fahrt über unebene Fahrwege, bleibt die Leitung 10 sicher gehalten, wodurch insbesondere auch eine Geräuschentwicklung verhindert wird.

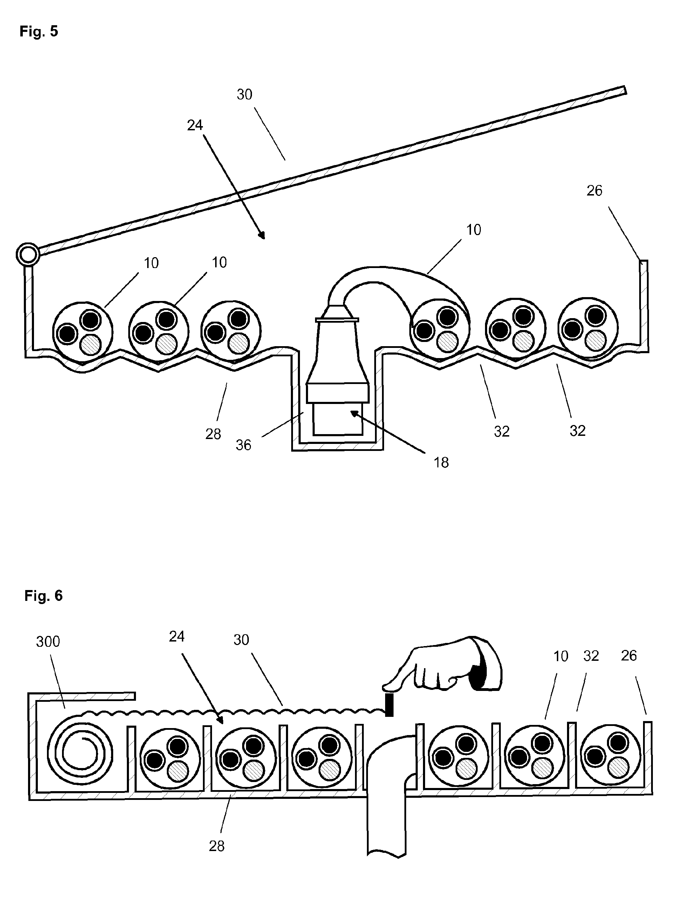

Figur 5 zeigt eine Schnittdarstellung einer erfindungsgemässen Speichervorrichtung 24, in die eine erfindungsgemässe Leitung 10 eingelegt ist. Die spiralförmig verlaufenden Windungen der Leitung 10 liegen an der Gehäusewand 28 der Speichervorrichtung 24 an. Die Gehäusewand 28 weist spiralförmig verlaufende Einformungen 32 auf, in die die Windungen der Leitung 10 eingelegt sind. Die Einformungen 32 in der Gehäusewand 28 können in ihrer Ausprägung beliebig hoch gestaltet werden. Durch die Einformungen 32 wird die gespeicherte Leitung 10 sicher gehalten, weshalb die Leitung 10 eine reduzierte Eigenstabilität aufweisen kann. Eine gute Stützung der Leitung 10 wird auch dann erreicht, wenn die Gehäusewand 28 eine konische Einformung aufweist, die in den Spiralverlauf der Leitung 10 eingreift. Sofern die Leitung 10 eine genügende Eigenstabilität aufweist, kann auf die Einformungen auch verzichtet werden.

In der Gehäusewand 28 ist zudem eine Vertiefung 36 vorgesehen, in welche der in der Mitte der Spirale vorgesehene Steckverbinder 18 eingelegt werden kann. Der Steckverbinder 18 kann auch in einer horizontalen Lage in die Vertiefung 36 eingelegt werden. Durch die an den Steckverbinder 18 angepasste Vertiefung 36 lässt sich eine Speichervorrichtung 24 für die Leitung 10 zur Verfügung stellen, welche flach ist und dennoch eine relativ grosse Kabellänge und einen grossen Steckverbinder 18 aufnehmen kann.

Die Speichervorrichtung 24 ist, wie in Figur 5 gezeigt, mit einer Abdeckung 30 versehen, mittels der die Speichervorrichtung 24 nach der Entnahme oder dem Einlegen der Leitung 10 jeweils abgedeckt werden kann. Die Abdeckung 30 kann zusätzlich mit einem Verschluss versehen werden, welcher beispielsweise mit einem Fahrzeugschlüssel abschliessbar ist. Ferner kann eine elektronische Verriegelung der Abdeckung 30 vorgesehen werden, die durch die Armaturen des Fahrzeugs gesteuert werden kann.

Figur 6 zeigt eine Schnittdarstellung einer weiteren Speichervorrichtung 24, in der senkrechte blechförmige Wandungen bzw. Einformungen 32 vorgesehen sind. Durch diese Wandungen 32 werden die einzelnen Windungen der Leitung 10 voneinander getrennt. Die Leitung 10 ist in dieser Figur in der Mitte der Spirale fest mit einer elektrischen Vorrichtung, einem Verbraucher oder einer Stromquelle, verbunden.

Die Abdeckung 30 der Speichervorrichtung 24 ist verschiebbar angeordnet. Beim Öffnen der Abdeckung 30 wird diese beispielsweise in einer seitlich angebrachten Kammer 300 aufgerollt. Diese Form der Abdeckung 30 stellt eine Alternative zur vorgängig gezeigten Abdeckung 30 dar. Auch diese Ausführungsform kann verschliessbar ausgestaltet werden.

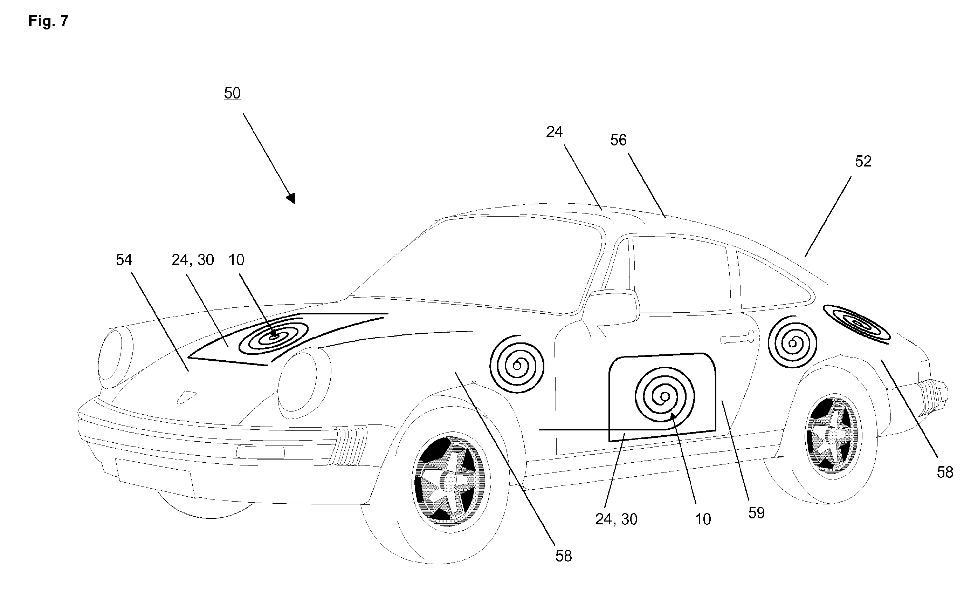

Figur 7 zeigt ein Fahrzeug 50 mit Speichervorrichtungen 24 zur Aufnahme der erfindungsgemässen Leitung 10. Die Speichervorrichtung 24 kann an verschiedensten Position am Fahrzeug 50 untergebracht werden. Besonders vorteilhaft kann die Speichervorrichtung 24 an Bereichen des Fahrzeugs 50 positioniert werden, an denen grössere annähernd ebene Flächen vorhanden sind. Aufgrund der vorteilhaften Ausgestaltung der erfindungsgemässen Leitung 10 genügt bereits eine geringe Raumtiefe, die praktisch im gesamten Karosseriebereich vorgesehen ist.

Die Speichervorrichtung 24 kann beispielsweise vorteilhaft in die Motorhaube 54, eine Tür 59, in das Fahrzeugdach 56, in die Kofferraumabdeckung 52, oder in einen Kotflügel 58 integriert werden. Besonders vorteilhaft ist die Anordnung der Speichervorrichtung 24 in einer am Fahrzeug oben liegenden Fläche, wie beispielsweise im Fahrzeugdach 56. Dies erlaubt es, die Leitung 10 mit einer oberhalb des Fahrzeugs 50 vorgesehenen Anschlusskupplung zu verbinden. Während des Energietransfers bleibt die Umgebung des Fahrzeugs 50 somit frei von elektrischen Leitungen, die als Hindernisse auftreten.

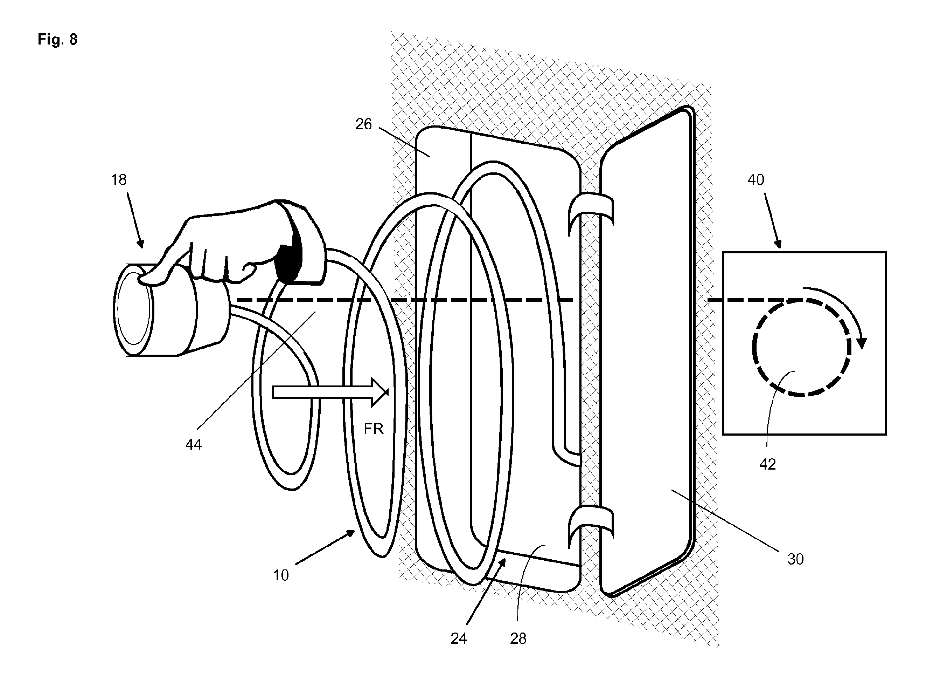

Figur 8 zeigt eine Speichervorrichtung 24, die einen Seilzug 40 mit einem Seil 44 umfasst, welches etwa in der Mitte der Gehäusewand 28 in die Speichervorrichtung 24 Spirale eintritt und mit dem Ende der Leitung 10 oder mit dem Steckverbinder 18 verbunden ist. Das Seil 44 wird dabei über einen Antrieb zurückgezogen, der einen Motor oder ein elastisches Element umfasst. Das durch das Zentrum der Spirale geführte Seil 44 ermöglicht es, die Leitung 10 und den Steckverbinder 18 mit einer zusätzlichen Rückstellkraft FR in die Ruhestellung zurück zu ziehen, bzw. in der Ruhestellung zu halten.

Auch in der Arbeitsstellung wird das Seil 44 durch das Zentrum der Spirale geführt. Dies verhindert teilweise ein Durchhängen oder Überdrehen der Leitung 10. Das Zurückführen der Leitung aus der Arbeitsstellung in die Ruhestellung wird zusätzlich erleichtert.

### Bezugszeichenliste

- 10: Leitung
- 12: Leiter
- 14: elektrische Leiter
- 16: Ummantelung
- 18: Steckverbinder
- 20: zusätzliches Formgebungselement
- 24: Speichervorrichtung
- 26: Vorrichtungsrand
- 28: Gehäusewand
- 30: Abdeckung
- 300: Kammer
- 32: Einformung in der Gehäusewand
- 34: magnetisches oder ferromagnetisches Element
- 36: Vertiefung in der Gehäusewand
- 38: Verschluss
- 40: Seilzug
- 42: elastisches Element, Federelement
- 44: Seil
- 50: Fahrzeug
- 500: elektrische Speichereinheit
- 52: Kofferraumabdeckung
- 54: Motorhaube
- 56: Fahrzeugdach
- 58: Kotflügel
- 59: Tür

- FR: Rückstellkraft

## Patentansprüche

1. Elektrische Leitung (10) insbesondere für die Energieversorgung eines Fahrzeugs (50), mit einer Ummantelung (16), innerhalb der wenigstens zwei isolierte elektrische Leiter (12) vorgesehen sind, die mit wenigstens einem Steckverbinder (18) an mindestens einem ersten Ende der Leitung (10) verbunden sind, **dadurch gekennzeichnet, dass** die Ummantelung (16) und/oder die Leiter (12) und/oder wenigstens ein in der Leitung (10) vorzugsweise vorgesehenes Formgebungselement (20) derart ausgestaltet ist, dass die Leitung (10) mit einer Rückstellkraft in einer Ruhestellung gehalten ist, in der die Leitung (10) die Form einer Spirale aufweist und entlang einer ebenen oder gekrümmten Ruhefläche ausgerichtet ist.

2. Leitung (10) nach Anspruch 1, **dadurch gekennzeichnet, dass** die Ruhefläche zumindest teilweise konisch ausgebildet ist.

3. Leitung (10) nach Anspruch 1 oder 2, **dadurch gekennzeichnet, dass** die Leitung (10) an dem aussen liegenden Ende der Spirale stationär gehalten und mit einer Stromquelle oder einem Verbraucher verbunden ist.

4. Leitung (10) nach Anspruch 1, 2 oder 3, **dadurch gekennzeichnet, dass** die Ummantelung (16) und/oder das Formgebungselement (20) aus einem Formgedächtnis-Polymer oder aus einer Metalllegierung mit Formgedächtnis, vorzugsweise aus Nitinol, besteht.

5. Leitung (10) nach einem der Ansprüche 1 - 4, **dadurch gekennzeichnet, dass** die Leitung (10) mindestens teilweise aus einem thermoplastischen Kautschuk oder einem thermoplastischen Elastomer, vorzugsweise aus PUR und/oder PVC-Nitrilkautschuk besteht und/oder dass der elektrische Leiter (12) vorzugsweise aus Kupfer oder Aluminium oder aus einer Legierung, die Kupfer und/oder Aluminium enthält, oder aus einem leitenden Kunststoff besteht.

6. Leitung (10) nach einem der Ansprüche 1 - 5, **dadurch gekennzeichnet, dass** die Leitung (10) vorzugsweise über die gesamte Länge, durchgehend oder segmentweise, mit magnetischen oder ferromagnetischen Elementen (34), vorzugsweise hartmagnetischen Elementen, versehen ist, die innerhalb oder ausserhalb der Ummantelung (16) angeordnet oder in das Material der Ummantelung (16) eingebunden sind und/oder dass der Steckverbinder (18) mit wenigstens einem magnetischen oder ferromagnetischen Element (34) versehen ist.

7. Leitung (10) nach Anspruch 6, **dadurch gekennzeichnet, dass** die magnetischen Elemente (34) entlang der Peripherie der Leitung (10) gleichmässig verteilt oder auf einer Seite der Leitung (10) angeordnet sind, die in der Ruhestellung der Leitung (10), in der diese eine Spirale bildet, einer metallenen oder magnetischen Gehäusewand (28) einer Speichervorrichtung (24) zugewandt ist.

8. Speichervorrichtung (24) zur Aufnahme einer elektrischen Leitung (10) gemäss Anspruch 1, **dadurch gekennzeichnet,** eine Gehäusewand (28) vorgesehen ist, an der die Leitung (10) in der Ruhestellung anliegt und die zusammen mit einer Abdeckung (30) und einer dazwischen liegenden Seitenwand (26) einen Speicherraum mit geringer Bauhöhe einschliesst, dessen Abmessungen entsprechend den Abmessungen der Leitung (10) in der Ruhestellung gewählt sind, in der die Leitung (10) die Form einer Spirale aufweist.

9. Speichervorrichtung (24) nach Anspruch 8, **dadurch gekennzeichnet, dass** die Gehäusewand (28) wenigstens eine Einformung (32) aufweist, welche in die Spiralform der anliegenden Leitung (10) eingreift.

10. Speichervorrichtung (24) nach einem der Ansprüche 8 oder 9, **dadurch gekennzeichnet, dass** die Gehäusewand (28) mit wenigstens einem magnetischen oder ferromagnetischen Element (34) versehen ist oder aus einem magnetischen oder ferromagnetischen Material besteht, so dass die Leitung (10) und/oder der Steckverbinder (18), die wenigstens ein magnetisches oder ferromagnetisches Element (34) aufweisen, durch ein magnetisches Kraftfeld mit der Gehäusewand (28) verbindbar sind.

11. Speichervorrichtung (24) nach einem der Ansprüche 8 - 10, **dadurch gekennzeichnet, dass** ein gegebenenfalls mit einem elektrischen Antrieb oder einem elastischen Element (42) versehener Seilzug (40) vorgesehen ist, dessen Seil (44) im Bereich des Zentrums der von der Leitung (10) gebildeten Spirale aus der Gehäusewand (28) der Speichervorrichtung (24) austritt und dessen Ende am Steckverbinder (18) oder nahe dem Steckverbinder (18) an der Leitung (10) befestigt ist.

12. Speichervorrichtung (24) nach einem der Ansprüche 8 - 11, **dadurch gekennzeichnet, dass** der wenigstens eine Steckverbinder (18) in eine Vertiefung (36) einführbar ist, die zumindest annähernd im Zentrum oder am Rand der Gehäusewand (28) vorzugsweise darin eingeformt ist.

13. Speichervorrichtung (24) nach einem der Ansprüche 8 - 12, **dadurch gekennzeichnet, dass** die Abdeckung (30) drehbar oder verschiebbar gehalten ist und vorzugsweise mittels eines Verschluss (38) abschliessbar ist.

14. Fahrzeug (50) mit einer Speichervorrichtung (24) nach Anspruch 8, die der Aufnahme einer Leitung (10) gemäss Anspruch 1 dient.

15. Fahrzeug (50) nach Anspruche 14, **dadurch gekennzeichnet, dass** die Speichervorrichtung (24) in einen Teil der Karosserie des Fahrzeugs (50), wie die Kofferraumabdeckung (52), eine Tür (59), die Motorhaube (54), das Fahrzeugdach (56) oder in einen Kotflügel (58) integriert ist.
